(19) Europäisches Patentamt
European Patent Office
Office européen des brevets

(11) **EP 2 843 619 A2**

(12) **EUROPEAN PATENT APPLICATION**

(43) Date of publication:
**04.03.2015 Bulletin 2015/10**

(51) Int Cl.:
***G06T 7/00*** (2006.01)

(21) Application number: **14180531.7**

(22) Date of filing: **11.08.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **30.08.2013 FR 1358353**<br><br>(71) Applicant: **Thomson Licensing**<br>**92130 Issy-les-Moulineaux (FR)** | (72) Inventors:<br>• **Jolly, Emmanuel**<br>**35576 CESSON-SÉVIGNÉ (FR)**<br>• **Stauder, Jurgen**<br>**35576 CESSON-SÉVIGNÉ (FR)**<br>• **Kervec, Jonathan**<br>**35576 CESSON-SÉVIGNÉ (FR)**<br><br>(74) Representative: **Browaeys, Jean-Philippe**<br>**Technicolor**<br>**1, rue Jeanne d'Arc**<br>**92443 Issy-les-Moulineaux (FR)** |

(54) **Method and device for processing of non-aligned images and corresponding computer programme**

(57)    The invention relates to a method for image processing implementing a first step of alignment (11) of at least two images representative of a same scene and having different colours, known as source image and target image respectively, delivering a first aligned image.

According to the invention, such a method also implements:

- a second step of alignment (12) of said source image and said first aligned image, delivering a second aligned image,
- a step of construction (13) of a confidence mask, corresponding to an image identifying the regions in which said first aligned image is correctly aligned with said second aligned image.

Fig. 1

**Description**

**1. Domain of the invention**

The domain of the invention is that of image processing, and particularly the processing of non-aligned images.

More specifically, the invention relates to the image colorimetry, and notably proposes a technique enabling a colours error between two non-aligned images representative of a same scene to be quantified, or a mapping function to be constructed enabling the mapping of non-aligned colours known as "colour mapping" or "colour transfer".

The invention finds applications in the creation of image or video type contents, specifically during the post-production phase enabling the content to be finalised prior to diffusion.

**2. Prior art**

Colour mapping is a technique enabling colours of an image, known as a source image, to be transformed by assigning the colours from another image, known as a target or reference image, using a mapping function.

Such a colours mapping function can notably be used to find the original image for which the colours have been modified (reverse-engineering), to place in correspondence the colours of two versions of a same image obtained using distinct capture devices, to place in correspondence the colours of two versions of a same image that have transited in different streams, etc.

Typically, the mapping function is constructed by filling a correspondence table, for which the inputs correspond to the values of pixels of the source image and the outputs correspond to values of corresponding pixels of the target image. If some values are missing, they can be determined using a conventional algorithm, for example of interpolation or extrapolation type. A complete correspondence table is thus obtained, also called a 3D Look Up Table or 3D LUT. This correspondence table can then be used to impose on the source image, or on other images transiting the same stream, the colours (i.e. the values of pixels) of the target image.

While this technique for construction of the mapping function confers good results and it easy to implement, it can not be used when the source and target images are not geometrically aligned.

As a result, if the source and target images are not geometrically aligned, it is necessary initially to re-align them using an alignment technique, to be able then secondly to construct the colours mapping function.

For example, such an alignment algorithm implements a SIFT (Scale-invariant feature transform) transform to detect and identify similar elements between the source and target images. The main steps implemented by such an automatic alignment algorithm are the following:

- searching for points of interest in the source and target images,
- determining descriptors of these points of interest,
- comparing of descriptors associated with the source and target images to obtain point pairs having similar descriptors,
- determining an information model (homographic or other) enabling the points of interest of the source image to be placed in correspondence with the points of interest of the target image (i.e. enabling the source image to be transformed into the target image by transporting the points of pairs calculated previously from their start positions to their end positions),
- applying the deformation model to the source image to obtain a deformed source image (i.e. aligned), that is geometrically identical to the target image.

Typically these techniques use statistical approaches. As a result, they do not enable two images to be aligned perfectly and alignment errors can remain.

As a result of these inaccuracies at alignment level, the colour mapping function, constructed from the aligned source image and the target image, is not optimal. For example, an error of 1 %o in the values of parameters of the distortion model could lead to an offset of 1 or 2 pixels in the horizontal and/or vertical directions of source image aligned with respect to the target image, if we consider images of 4 megapixels. This entails the construction of a poorly adapted mapping function, as it is filled with values of pixels from pixels that do not correspond.

There is therefore a need for a new technique enabling at least two images to be correctly aligned, or to identify the regions of images correctly aligned, in order to improve notably the construction of a mapping function.

**3. Summary of the invention**

The invention proposes a new solution in the form of a method for processing images, implementing a first step of alignment of at least two images representative of a same scene and presenting different colours, known as source image and target image respectively, delivering a first aligned image.

According to the invention, such a method also implements:

- a second step of alignment of the source image and the first aligned image, delivering a second aligned image,
- a step of construction of a confidence mask, corresponding to an image identifying the regions of the first aligned image correctly aligned with the corresponding regions of the second aligned image.

The invention then is based upon the implementation of two successive alignment steps enabling the construction of a confidence mask, providing information on the regions correctly aligned of first and second aligned images. In other words, such a confidence mask enables alignment errors remaining after the implementation of the second alignment step to be identified.

This information can then be used to determine a colours error between two images, to construct a well adapted colour mapping function, etc., even when the source and target images are not geometrically aligned.

In fact, the implementation of a first alignment step enables a first aligned image to be obtained for which the colours are those of the source image, and the second alignment step enables at least partial compensation of the alignment errors remaining after the implementation of the first alignment step.

As a result, the invention does not require the presence of additional information to correct the alignment errors, but re-uses the alignment technique to compensate the alignment errors remaining after the implementation of the first alignment.

To do this, it is noted that the first and second alignment steps preferentially implement the same alignment algorithm, but on two different image pairs (source image / target image for the first alignment step, source image / first aligned image for the second alignment step).

In addition, it is noted that the presence of regions in which the first and second aligned images are correctly aligned signifies that the implementation of the first alignment algorithm on the source image is correct, and that there is no alignment error. In other words, the confidence mask enables the regions in which the first aligned image is correctly aligned with the second aligned image to be identified, and consequently, the regions in which the first aligned image is correctly aligned with the target image.

Moreover, if the source image and the target image are not the same size, the bigger image is aligned on the smaller image. As a result, the source and target images can be exchanged for the construction of the confidence mask according to the invention.

Specifically, it is noted that the technique according to the invention adapts to the content of images as the confidence mask is constructed from first and second aligned images, themselves obtained from the source image and the target image.

According to a particular aspect of the invention, the first and second alignment steps respectively determine a first and second deformation model, and apply respectively the first model and second deformation model to the source image.

As a result, the first and second aligned images present the same colours as the source image, and it is easier to compare them to determine the remaining alignment errors.

According to a particular characteristic of the invention, the step of construction of a confidence mask implements a step of comparison of the first aligned image and the second aligned image, delivering a coloured comparison image, and a step of transformation of the coloured comparison image into an image presenting levels of grey, corresponding to the confidence mask.

The transformation in levels of grey notably enables a value between 0 and 255 to be allocated to the pixels of the confidence mask. A white pixel, coded by the value 255, enables for example to indicate that the pixel situated in the same position in the first aligned image and the pixel situated in the same position in the second aligned image are identical. A grey or black pixel, coded by a value between 0 and 254, enables for example to indicate that the pixel situated in the same position in the aligned image and the pixel situated in the same position in the second aligned image are not identical (with a value closer to 0 when the pixels differ strongly, or closer to 255 when the pixels are almost identical).

Specifically, the transformation step delivers a binary image, a first value ("1" for example) being associated with the pixels corresponding to the regions in which the first aligned image and the second aligned image are correctly aligned and a second value ("0" for example) being associated with the pixels corresponding to the regions in which the first aligned image and the second aligned image are not correctly aligned.

For example, the transformation step implements:

- a decomposition of the coloured comparison image into three images corresponding respectively to the red component, the green component and the blue component of the coloured comparison image, known as the original components,

- an inversion of original component colours, delivering components known as inverted components,

- for at least one of the inverted components:

   ○ a comparison of values of pixels of the inverted component with a predetermined threshold, and
   ○ for values greater than or equal to the threshold, a conversion of values to the first value,
   ○ for values less than the threshold, a conversion of values to the second value, delivering at least one component known as the thresholded component,

- a multiplication of the red component, inverted or thresholded if it exists, of the green component, inverted or thresholded if it exists, and the blue component, inverted or thresholded if it exists.

The step of decomposition of the coloured comparison image is a conventional step, enabling the set of red pixels, the set of blue pixels and the set of green pixels, having values between 0 and 255 to be stored separately.

The step of inversion of colours is also a conventional step, enabling transformation of the value 0 of a pixel to the value 255 or the value 255 of a pixel to the value 0 for example.

The "conversion" step enables the binary value of '0' or '1' to be forced on the set of pixels, while taking account of a threshold, that may be different according to the component. For example, if a threshold equal to 100 is considered, it is considered that all the pixels obtained as a result of the colours inversion step having a value less than 100 are coded by the value '0', and that all the pixels obtained as a result of the colours inversion step having a value greater than or equal to 100 are coded by the value '1'.

The thresholded (or simply inverted if they have not undergone thresholding) red, green and blue components are then multiplied point by point. Hence, for a given position, the value of the pixel of the red component at this position, inverted or thresholded if it exists, the value of the green component at this position, inverted or thresholded if it exists, and the value of the pixel of the blue component at this position, inverted or thresholded if it exists, are multiplied to obtain the confidence mask. If for a given position, the value of the pixel is equal to 1 for the three components, then the value of the corresponding pixel in the mask will be equal to '1' and will be coded by a white pixel.

According to a particular embodiment of the invention, the method also implements a step of construction of a function for mapping the colours of the first image aligned on the target image, via the confidence mask.

According to the invention, a confidence mask is thus first constructed enabling the alignment errors remaining after the implementation of the second alignment step to be identified, and the mapping function is constructed taking account of this confidence mask.

Specifically, the step of construction of a colours mapping function constructs a correspondence table defining, for the pixels of the confidence mask associated with the first value, the values of corresponding pixels of the first image aligned at input and the values of the corresponding pixels of the target image at output.

The technique according to the invention thus enables a colours mapping function to be constructed in a simple way, by using a conventional construction technique in the regions authorised by the confidence mask.

For example, if the confidence mask is binary and has pixels of a first value in the regions in which the first and second aligned images are identical (whites for example), and the pixels of a second value in the regions in which the first and second aligned images are different (blacks for example), the invention enables a mapping function to be constructed by filling a correspondence table for which the inputs to the values of pixels of the first aligned image and the outputs correspond to the values of corresponding pixels of the target image only for the values of pixels correspond to the white pixels of the confidence mask. The missing values of the table can then be deduced in a conventional way, for example by interpolation or extrapolation.

According to another particular embodiment of the invention, the method also implements a step of determination of a colours error between the first aligned image and the target image, via said confidence mask.

Specifically, the step of determination of a colours error implements, for the pixels of the confidence mask associated with the first value, a calculation of distance between the values of corresponding pixels of the first aligned image and the values of corresponding pixels of the target image.

Hence the invention enables, according to the embodiment, to quantify the colorimetric error between two images, while limiting the calculation of this error to the regions in which the first aligned image and the target image are presumed to be correctly aligned.

In another embodiment, the invention relates to a device for processing images comprising:

- an alignment module configured to implement a first alignment of at least two images representative of a same scene and having different colours, known as the source image and target image respectively, delivering a first aligned image, and a second alignment of the source image and of the first image aligned, delivering a second aligned image.
- a construction module configured to construct a confidence mask, corresponding to an image identifying the regions of the first aligned image correctly aligned with the corresponding regions of the second aligned image.

Such an image processing device is notably adapted to implement the image processing method described previously. It is for example integrated with an image alignment device, a video coder, a telephone type terminal, computer, tablet, etc.

This device can of course comprise different characteristics relative to the image processing method according to the invention, that can be combined are taken separately. Thus, the characteristics and advantages of this device are the same as those of the image processing method. Consequently, they are not more fully described here.

Specifically, it is noted that a single alignment module can be used to implement the two alignment steps, or two alignment modules can be used to implement each of the two alignment steps.

In another embodiment, the invention relates to one or several computer programmes comprising instructions for the implementation of the image processing method as described above, when this programme or these programmes is/are executed by a processor.

The methods according to the invention can thus be implemented in various ways, notably in cable form or in computer application form.

Hence, the different characteristics of the present invention can be implemented in the form of the system, devices, methods or supports readable via computer. Consequently, the different characteristics of the present invention can take an entirely hardware, software or combined hardware and software form.

Moreover, some characteristics of the present invention can take the form of a computer readable storage support. Any combination of one or more computer readable storage supports can be used.

4. List of figures

Other characteristics and advantages of the invention will emerge more clearly upon reading the following description of a particular embodiment of the invention, provided as a non-restrictive example and referring to the annexed drawings, wherein:

- figure 1 shows the main steps implemented by a method for processing images according to an embodiment of the invention,
- figure 2 shows an example of construction of a confidence mask according to the method of figure 1,
- figure 3 shows the simplified structure of an image processing device according to a particular embodiment of the invention.

5. Description of an embodiment of the invention

*5.1 General principle*

The invention relates to the processing of images representative of a same scene, but that are not geometrically aligned.

The general principle of the invention is based on the construction of a confidence mask, providing notably an item of information on an alignment error remaining after the implementation of two alignment algorithms on the images.

Such a confidence mask notably enables identification of the regions of two images supposed to be correctly aligned, notably in a way that uses the values of pixels associated with these regions in different applications (construction of a colours mapping function, determination of a colours error, etc.).

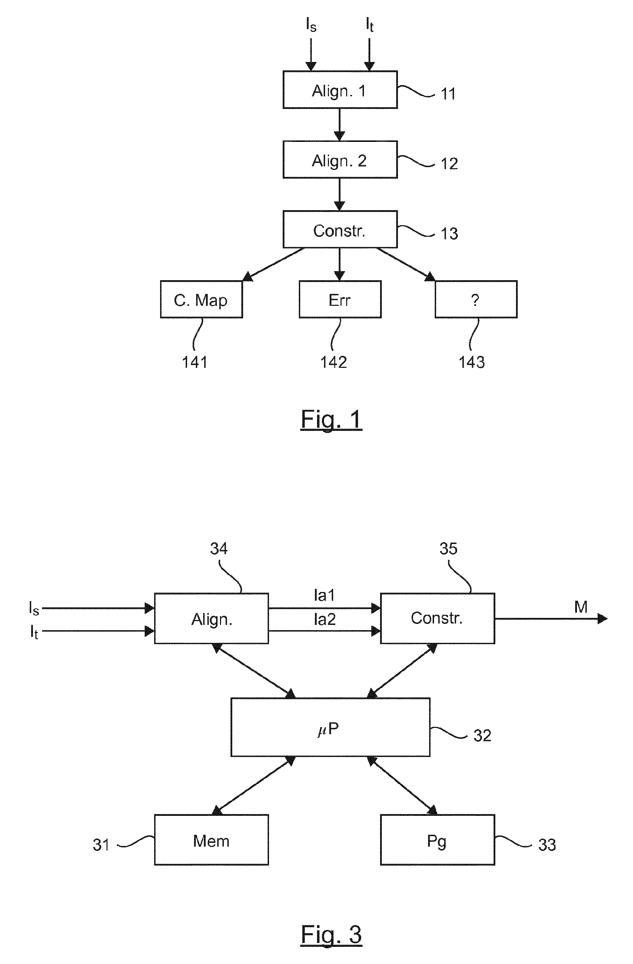

Hereafter, in relation with figure 1 are presented the main steps implemented by a method for processing images according to an embodiment of the invention.

Two images are first considered representative of a same scene (notably i.e. from a same view point) and having different colours, known as source image Is and target image It.

During a first alignment step 11, the source and target images are aligned, providing a first aligned image Ia1.

During a second alignment step 12, the source image and the first aligned image are aligned, delivering a second aligned image Ia2.

During a third construction step 13, a confidence mask M is constructed, corresponding to an image identifying the regions in which the first aligned image Ia1 and the second aligned image Ia2 are correctly aligned. In the regions in which these two images are correctly aligned, this means that the implementation of the first alignment algorithm on the source image is correct and that there is no alignment error.

Such a confidence mask can then be used in combination with the target image It and the first aligned image Ia1 in different applications: construction of a colours mapping function C.Map. 141, determination of a colours error Err. 142, or other application 143.

*5.2 Description of a particular embodiment*

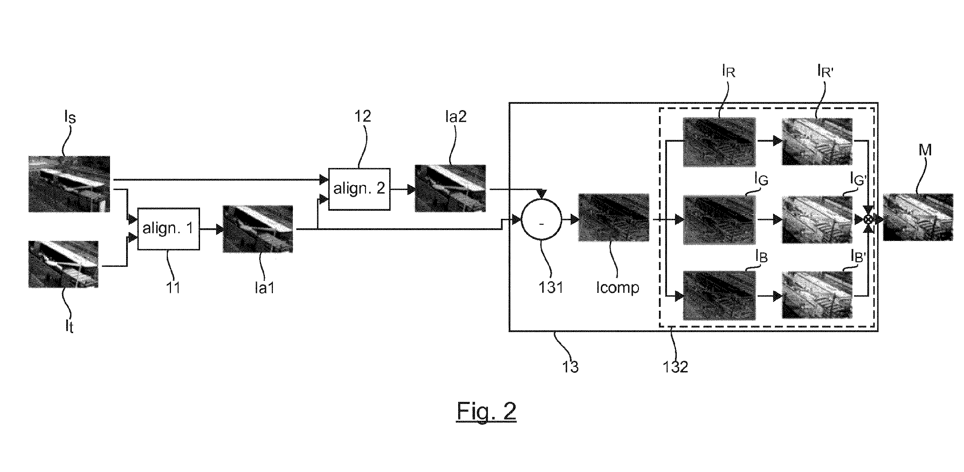

In relation with figure 2 a particular embodiment of the invention is presented, according to which a source image Is is aligned on the target image It during a first alignment step 11, and the source image Is is aligned on the first aligned image Ia1 during the second alignment 12.

As shown in figure 2, the source image Is, associated with a first set of colours, is aligned during the first alignment step 11 on the target image It, associated with a second set of colours.

The first aligned image Ia1 associated with the first set of colours, is thus obtained

The source image Is is then aligned during the second alignment step 12 on the first aligned image Ia1.

The second aligned image Ia2 also associated with the first set of colours, is thus obtained

It is noted that the two alignment steps 11 and 12 implement a same alignment algorithm.

For example, such an alignment algorithm implements a SIFT type transform, as described in relation with the prior art, to detect and identify the elements that are similar in the source image and in the target image during the first alignment step 11, and the source image and the first image aligned during the second alignment step 12.

The first and second alignment steps respectively determine a first and second deformation model, and apply respectively the first model and second deformation model to the source image. As a result, the first aligned image Ia1 and the second aligned image Ia2 have the same colours as the source image Is.

Hence, in applying the first deformation model to the source image Is during the step of alignment of the source and target images, the source image is deformed and the first aligned image Ia1, geometrically similar to the target image is obtained. Then, in applying the second deformation model to the source image during the step of alignment of the source image and the first aligned image, the source image is deformed and the second aligned image Ia2, geometrically similar to the first aligned image Ia1 is obtained.

Naturally, other alignment techniques can be used for the two alignment steps, using for example SURF (Speeded Up Robust Features), RANSAC (RANdom SAmple Consensus), or other known algorithms.

At the end of the two alignment steps 11 and 12, a confidence mask is constructed during a third construction step 13.

For example, according to the embodiment shown in figure 2, the step of construction of a confidence mask implements a step of comparison 131 of the first aligned image Ia1 and the second aligned image Ia2, delivering a coloured comparison image Icomp, and a step of transformation 132 of the coloured comparison image Icomp into an image presenting levels of grey, corresponding to the confidence mask M.

The comparison step 131 enables the significant differences between the first aligned image Ia1 and the second aligned image Ia2 to be identified. For example, the comparison step 131 implements and subtraction of the second aligned image Ia2 from the first aligned image Ia1. It is in fact possible to subtract these two aligned images due to the fact that they have the same set of colours.

The coloured comparison image Icomp obtained enables the alignment error remaining after the implementation of the two alignment algorithms to be shown.

The transform step 132 enables the coloured comparison image Icomp to be converted into an image in levels of grey, corresponding to the confidence mask M. The transform into layers of grey notably enables a value between 0 and 255 to be allocated to the pixels of the confidence mask.

For example, if the aim is to obtain a binary (two colour) mask formed only of white or black pixels, the transform step 132 implements a decomposition of the coloured comparison image into three images corresponding respectively to the red component $I_R$, the green component $I_G$, and the blue component $I_B$ of the coloured comparison image Icomp, then an inversion of red, green and blue components, delivering components known as inverted components. For at least one of the inverted components, the transform step 132 then implements:

- a comparison of values of pixels of the inverted component with a predetermined threshold, and
- for values greater than or equal to the threshold, a conversion of values to the first value (for example white),
- for values less than the threshold, a conversion of values to the second value (for example black),

delivering at least one thresholded component.

For example, such a threshold is identical for the different components, and takes a value of the order of 255, 254 or 253. Of course, the value of this threshold can be adapted according to the application envisaged.

For example, this conversion operation is implemented for the three red, green and blue inverted components, and delivers three thresholded components noted as $I_R'$, $I_G'$ and $I_B'$. Then these components are multiplied together to obtain the mask M.

Other techniques can also be implemented to transform the coloured comparison image into an image with levels of grey. In particular, it is noted that the colours inversion step can be implemented before the coloured comparison image decomposition operation, or can be implemented by inversing the threshold value then converting the values less than the threshold to the first value and the values greater than or equal to the threshold to a second value.

In a variant, the coloured comparison image Icomp can be decomposed into three images corresponding respectively to the red component $I_R$, the green component $I_G$, and the blue component $I_B$ of the coloured comparison image Icomp and calculate the luminance L of pixels of the coloured comparison image by using the following formula:

$$L = \alpha I_R + \beta I_G + \gamma I_B$$

with $\alpha$, $\beta$ and $y$ as constants, for example of 1 or defined according to known luminance calculation formula (for example L = 0,299$I_R$ + 0,587$I_G$ + 0,114$I_B$ in the domain of television).

If the inverse of the luminance of a pixel is greater than a predetermined threshold (for example to the order of 254), than a value equal to 255 (i.e. a white pixel) is allocated to the pixel situated in the same position in the mask. Otherwise, a value equal to 0 (i.e. a black pixel) is allocated to the pixel situated in the same position in the mask.

A confidence mask is obtained in this way, formed of black and white pixels, or of levels of grey depending on the transform technique used and the implementation or not of a threshold, enabling identification of the regions in which the first and second aligned images, and consequently the first aligned image and the target image, are correctly aligned.

It is noted that this mask has a size identical to that of the target image and the first aligned image. In fact, after the implementation of the first alignment step, the target image It and the first aligned image Ia1 have the same size and noticeably the same geometry.

### 5.3 Example of use of a confidence mask

Such a confidence mask, enabling the regions in which the first and second aligned images are correctly aligned, to be identified, can notably be stored or used in diverse applications.

For example, such a confidence mask can be used to quantify a colormetric error between the source image and the target image, notably when they have colours that are very close. In this case, after having constructed the confidence mask, the mask is applied to the target image and the first aligned image (that has the same set of colours as the source image, and the same size as the target image, due to the same implementation of the first alignment step).

In particular, if the mask is a binary mask formed of white pixels in the regions in which the first and second aligned images Ia1 and Ia2 are correctly aligned, and of black pixels in the other regions, this signifies that the implementation of the first alignment algorithm is of good quality (i.e. has no alignment errors) in the regions formed of white pixels, and that it is therefore possible to use these regions of the first aligned image Ia1 to quantify the colormetric error between the source image and the target image.

To do this, for example a distance between the pixels of the first aligned image Ia1 and the corresponding pixels of the target image is calculated, only in the regions formed of white pixels of the confidence mask.

According to another example, such a mask can be used to construct a colours mapping function between the source image and the target image. In this case, after having constructed the confidence mask, the mask is applied to the target image and the first aligned image (that as indicated previously, has the same set of colours as the source image, and the same size as the target image, due to the implementation of the first alignment step).

In particular, if the mask is a binary mask formed of white pixels in the regions in which the first and second aligned images Ia1 and Ia2 are correctly aligned, and of black pixels in the other regions, this signifies that the implementation of the first alignment algorithm is of good quality (i.e. has no alignment errors) in the regions formed of white pixels, and that it is therefore possible to use these regions of the first aligned image Ia1 to construct a colours mapping function between the source image and the target image.

To do this, for example a correspondence table is filled, taking at input the values of pixels of the first aligned image Ia1 and at output the values of corresponding pixels of the target image, only in the regions formed of white pixels of the confidence mask.

In other words the presence of a white pixel in a given position of the confidence mask signifies that the corresponding pixel of the first aligned image (aligned source image) and the corresponding pixel of the target image can be used to construct the colours mapping function. On the contrary, the presence of a black pixel in a given position of the confidence mask signifies that the corresponding pixel of the first aligned image (aligned source image) and the corresponding pixel of the target image can not be used to construct the colours mapping function, as in this position, the first image is not correctly aligned on the target image.

If it is considered that the confidence mask has levels of grey, i.e. is formed of pixels that can take values from 0 to 255, a correspondence table can be constructed for the set of pixels of the mask, taking at input the values of pixels of the first aligned image Ia1 and at output the corresponding pixels of the target image, and allocate to each line of the table an index of confidence. For example, for a given pixel position, if the value of the pixel in the confidence mask is 1, the confidence index allocated to the line corresponding to the values of this pixel in the first aligned image Ia1 and in the target image will be equal to 0 (0/255). If the value of this pixel in the confidence mask is 255, the confidence index allocated to the line corresponding to the values of this pixel in the first aligned image Ia1 and in the target image will be equal to 1 (255/255). If the value of this pixel in the confidence mask is x, for x comprised between 0 and 255, the confidence index allocated to the line corresponding to the values of this pixel in the first aligned image Ia1 and in the target image will be equal to x/255.

An item of information is therefore available on the quality of the correspondence table thus constructed.

In the cinema domain, such a mask can notably be used in post-production, after filming a film, to construct a colours mapping function. For example, in the first stage of post-production (Early Digital Intermediate Grade), the director may want to modify the colours of a sequence to add a dominant red. He can then modify an image of the sequence on his computer, and construct a correspondence table between the image before modification (source image) and the image after modification (target image) using the technique of construction of a confidence mask described above. The remainder of the sequence can then be modified using the correspondence table thus constructed.

Such a colours mapping function can also be used to place in correspondence two versions of a same film, for example a basic version without special effects and a version in which special effects are added, or two versions of the same film having been captured by different capture devices, or having transited in different channels, etc.

### 5.4 Simplified structure of the image processing device

Finally, in relation to figure 3 is presented the simplified structure of an image processing device implementing an image processing technique according to a particular embodiment of the invention.

As shown in figure 3, such an image processing device comprises a memory 31 comprising a buffer memory, a processing unit 32, equipped for example with a microprocessor $\mu P$ and controled by a computer programme 33, implementing the image processing method according to the invention.

At initialisation, the instructions of the computer programme code 33 are for example loaded into a RAM memory before being executed by the processor of the processing unit 32. The processing unit 32 receives at input at least one source image Is and one target image It corresponding to the same scene, but having different colour sets. The microprocessor of the processing unit 32 implements the steps of the image processing method described previously, according to the instructions of the computer programme 33, to construct a confidence mask M. To do this, the image processing device also comprises: at least one alignment module 34, configured to implement a first alignment of source image and target image, delivering a first aligned image, and a second alignment of the source image and the first aligned image, delivering a second aligned image, and a construction module 35 configured to construct a confidence mask, corresponding to an image identifying the regions in which the first aligned image is correctly aligned with the second aligned image.

These modules are controled by the microprocessor of the processing unit 32.

## Claims

1. Method for image processing, comprising :

   - a first step of alignment (11) of at least two images representative of a same scene and having different colours, known as source image and target image respectively, delivering a first aligned image,
   - a second step of alignment (12) of said source image and said first aligned image, delivering a second aligned image,
   - a step of construction (13) of a confidence mask, corresponding to an image identifying the regions of said first aligned image correctly aligned with the corresponding regions of said second aligned image.

2. Method for image processing according to claim 1, wherein said first (11) and second (12) alignment steps respectively determine a first and a second deformation model, and respectively apply said first deformation model and said second deformation model to said source image.

3. Method for image processing according to any one of claims 1 and 2, wherein said first (11) and second (12) alignment steps implement the same alignment algorithm.

4. Method for image processing according to any one of claims 1 to 3, wherein said step of construction (13) of a confidence mask implements a step of comparison (131) of said first aligned image and said second aligned image, delivering a coloured comparison image, and a step of transformation (132) of said coloured comparison image into an image presenting levels of grey, corresponding to said confidence mask.

5. Method for image processing according to claim 4, wherein said transformation step (132) delivers a binary image, a first value being associated with the pixels corresponding to the regions in which said first aligned image and said second aligned image are correctly aligned and a second value being associated with the pixels corresponding to the regions in which said first aligned image and said second aligned image are not correctly aligned.

6. Method for image processing according to claim 5, wherein said transformation step (132) implements:

   - a decomposition of said coloured comparison image into three images corresponding respectively to the red component, the green component and the blue component of said coloured comparison image, known as the original components,
   - an inversion step of colours of said original components, delivering components known as inverted components,
   - for at least one of said inverted components:

      o a comparison of values of pixels of said component with a predetermined threshold, and
      o for values greater than or equal to said threshold, a conversion of said values to said first value,
      o for values less than said threshold, a conversion of said values to said second value,

   delivering at least one thresholded component,
   - a multiplication of said red component, inverted or thresholded if it exists, of said green component, inverted or thresholded if it exists, and of said blue component, inverted or thresholded if it exists.

7. Method for image processing according to any one of claims 1 to 6, wherein it also implements a step of construction (141) of a colours mapping function of said first aligned image on said target image, from said confidence mask.

8. Method for image processing according to claims 5 and 7, wherein said construction step (141) of a colours mapping function constructs a correspondence table defining at input, for the pixels of said confidence mask associated with said first value, the values of corresponding pixels of said first aligned image and at output the values of corresponding pixels of said target image.

9. Method for image processing according to any one of claims 1 to 6, wherein it also implements a step of determination (142) of a colours error between said first aligned image and said target image, from said confidence mask.

**10.** Method for image processing according to claims 5 and 9, wherein said determination step (142) of a colours error implements, for the pixels of said confidence mask associated with said first value, a calculation of distance between the values of corresponding pixels of said first aligned image and the values of corresponding pixels of said target image.

**11.** Device for image processing comprising:

- an alignment module (34) configured to implement a first alignment of at least two images representative of a same scene and having different colours, known as source image and target image respectively, delivering a first aligned image, and a second alignment of said source image and of said first image aligned, delivering a second aligned image,
- a construction module (35) configured to construct a confidence mask, corresponding to an image identifying the regions of said first aligned image correctly aligned with the corresponding regions of said second aligned image.

**12.** Computer programme comprising instructions for the implementation of a method for image processing according to any one of claims 1 to 10 when this programme is executed by a processor.

$I_s$ $I_t$

Align. 1 — 11

Align. 2 — 12

Constr. — 13

C. Map | Err | ?

141 | 142 | 143

Fig. 1

34 | 35

$I_s$
$I_t$

Align. | Constr. | M

Ia1
Ia2

$\mu$P — 32

31 — Mem | Pg — 33

Fig. 3

Fig. 2